# EUROPEAN PATENT APPLICATION

(11) **EP 1 936 971 A2**
(43) Date of publication of application: **25.06.2008**
(21) Application number: 07123270.6
(22) Date of filing: 14.12.2007
(51) Int. Cl.: H04N 5/76, G11B 27/10

(54) **Content File Search Method and Apparatus for Mobile Terminal**

(30) Priority: 19.12.2006 KR 20060130310
(71) Applicant: Samsung Electronics Co., Ltd., Suwon-si, Gyeonggi-do 442-743 (KR)
(72) Inventor: You, Byeong Gyun, Gyeonggi-do (KR)
(74) Representative: Grünecker, Kinkeldey, Stockmair & Schwanhäusser Anwaltssozietät

(57) **Abstract**

A content file search method and apparatus for a mobile terminal are disclosed. The mobile terminal stores content files and at least one image file associated in part or whole with each content file. The method includes: displaying, in response to a content file search mode command, an image corresponding to one of the at least one image file; and searching images displayed in a continuous manner while shifting the displayed images in response to an input signal. When image files are displayed in a continuous manner for browsing, one of the displayed image files is selected and then a content file associated with the selected image file is played. Thus, the user can perform an intuitive content search with the help of visual images.

## Description

### BACKGROUND OF THE INVENTION

### Field of the Invention

The present invention relates generally to a mobile terminal and, more particularly, to a content file search method and apparatus for a mobile terminal that enable the user to visually locate a desired one of content files stored in the mobile terminal for replay with the help of visual images associated with each of the stored content files.

### Description of the Related Art

Recently, functions of a mobile terminal have been diversified. In particular, a mobile terminal having a mass storage device can store a large number of multimedia content files containing video and audio materials related to songs, photographs, music videos, movies and the like.

To play a desired one of multimedia content files stored in a mobile terminal having a mass storage device, a search by at least one of a keyword, artist, song, album title and genre is performed. Alternatively, preset categories are selected in sequence.

However, in such a conventional search process, the user may not be able to perform a visually intuitive search. That is, visual effects of storage media such as music compact discs and albums containing content files are not fully utilized for searching. Further, the search results are fragmentary according to keywords used, and various implications of album cover art are underutilized for searching.

### SUMMARY OF THE INVENTION

The present invention provides a content file search method and apparatus for a mobile terminal that enable an intuitive visual search for a desired content file by browsing still images associated with individual multimedia content files stored in the mobile terminal.

Another embodiment of the present invention provides a content file search method and apparatus for a mobile terminal, wherein still images associated with individual multimedia content files stored in the mobile terminal are displayed continuously and shifted left or right during image searching.

Another embodiment of the present invention provides a content file search method and apparatus for a mobile terminal, wherein still images associated with individual multimedia content files stored in the mobile terminal are adjusted in number and display size during image searching.

In accordance with an exemplary embodiment of the present invention, there is provided a content file search method for a mobile terminal that stores content files and at least one image file associated in part or whole with the content files, the method including: in response to a content file search mode command, displaying in a continuous manner an image corresponding to one of the at least one image file; and searching the at least one image displayed in a continuous manner while shifting the displayed at least one image in response to an input signal.

In accordance with another exemplary embodiment of the present invention, there is provided a content file search apparatus for a mobile terminal, including: a memory unit for storing content files and at least one image file associated in part or whole with the content files; a display unit for displaying a file list of content files stored in the memory unit, and at least one image corresponding to the associated at least one image file; a key input unit having a rotatable wheel key; and a control unit for controlling the display unit to display the at least one image in a continuous manner while shifting the displayed at least one image in response to an input signal from the key input unit.

### BRIEF DESCRIPTION OF THE DRAWINGS

The above and other features and advantages of the present invention will be more apparent from the following detailed description in conjunction with the accompanying drawings, in which:
FIG. 1 illustrates a configuration of a mobile terminal having a content file search apparatus according to an exemplary embodiment of the present invention;
FIG. 2 illustrates a configuration of a key input unit of the mobile terminal of FIG. 1;
FIG. 3 is a table illustrating examples of icons for indicating key states in response to input of keys through the key input unit of FIG. 2;
FIGS. 4A and 4B are a flow chart illustrating an example of a content file search method according to another exemplary embodiment of the present invention;
FIG. 5 is a flow chart illustrating an example of an image display adjustment procedure in the method of FIGS. 4A and 4B according to rotational speed of a wheel key;
FIG. 6 is an example of a screen representation illustrating a content search menu in a music mode;
FIG. 7 is an example of a screen representation illustrating an image output during an album cover search operation;
FIG. 8 is an example of a screen representation illustrating display of image files according to rotation of a wheel key during an album cover search operation;
FIG. 9 is an example of a screen representation illustrating a still cover image of an album and a list of songs contained in the album;
FIG. 10 is an example of a screen representation illustrating an image indicating playing of an audio content in a music mode;
FIGS. 11A to 15E are examples of screen representations illustrating images output during image searching; and
FIGS. 16A to 17K are examples of screen representations illustrating images output in response to input of an option key during image searching.

### DETAILED DESCRIPTION OF EXEMPLARY EMBODIMENTS

Hereinafter, exemplary embodiments of the present invention are described in detail with reference to the accompanying drawings. The same reference symbols identify the same or corresponding elements in the drawings. For the purposes of clarity and simplicity, detailed descriptions of constructions or processes known in the art may be omitted to avoid obscuring the invention in unnecessary detail.

A mobile terminal according to the present invention may have various functions related to, for example, photographing, phone call processing, digital broadcast reception, and information processing.

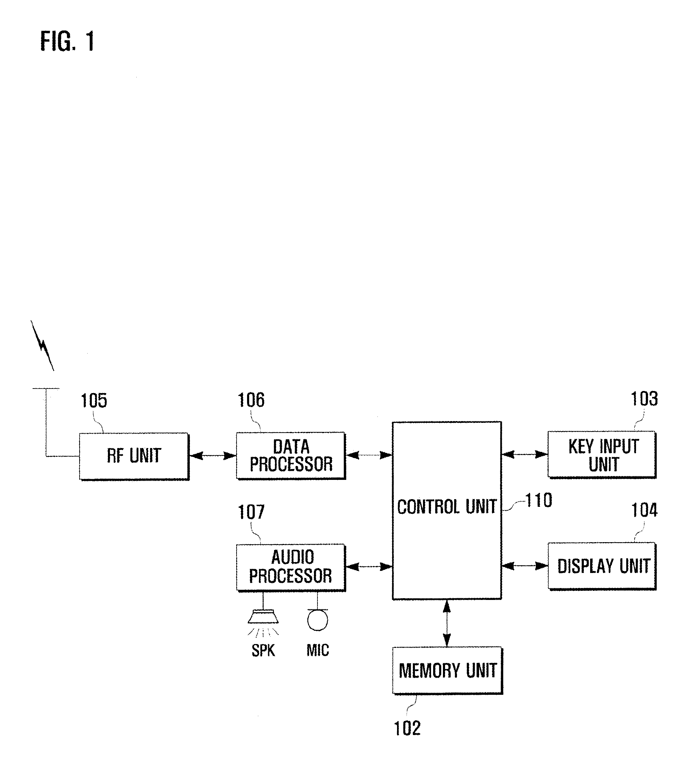

FIG. 1 illustrates an example of a configuration of a mobile terminal having a content file search apparatus according to an exemplary embodiment of the present invention.

Referring to FIG. 1, the mobile terminal includes a control unit 101, memory unit 102, key input unit 103, display unit 104, radio frequency (RF) unit 105, data processor 106, and audio processor 107.

The control unit 101 controls the overall operation and signal exchange between internal elements of the mobile terminal. That is, the control unit 101 is operably connected between to control signal exchange therebetween the memory unit 102, the key input unit 103, the display unit 104, the data processor 106, and the audio processor 107.

In particular, the control unit 101 controls the display unit 104 to display content files stored in the memory unit 102 and image files associated with the content files according to key signals from the key input unit 103. The control unit 101 controls the display unit 104 to display at least one image file. The control unit 101 also controls movement of displayed image files for image searching according to a key signal. That is, the control unit 101 displays at least one image file on the display unit 104, and moves the displayed at least one image file in response to a key signal such that no gap is present between the displayed image files. In an alternative embodiment, the control unit 101 adjusts the number and sizes of image files displayed on the display unit 104 according to movement speed of the image files.

In an alternative embodiment, the memory unit 102 includes a program memory section and a data memory section. The program memory section stores an operating system for booting the mobile terminal. In particular, the program memory section stores a protocol for mapping the at least one image file to related at least one content file (described later). The data memory section stores multimedia content files downloaded through wired or wireless networks. In particular, the data memory section stores a plurality of content files, and at least one image file associated in one of part and whole with the plurality of content files.

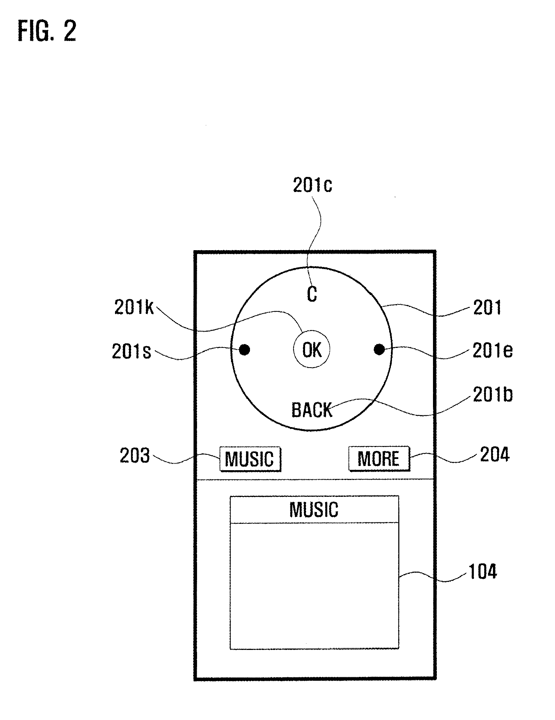

The key input unit 103 inputs a user command and information for setting and controlling operations of the mobile terminal, and sends a corresponding key signal to the control unit 101. In particular, the key input unit 103 inputs a user command using a wheel key and a touch pad instead of an alphanumeric keypad, and is described later in connection with FIG. 2.

The display unit 104 displays visual data from the control unit 101. In an alternative embodiment, the display unit 104 includes a panel of liquid crystal display (LCD) devices. In an alternative embodiment, if the panel has a touch screen capability, the display unit 104 also acts as an input means. In particular, the display unit 104 displays a content file list of content files stored in the memory unit 102. Upon selection of a content file of the content file list, the display unit 104 displays an image file associated with the selected content file. In an alternative embodiment, the display unit 104 changes the number, sizes, and movement speed of displayed image files in response to key signals from the key input unit 103 under the control of the control unit 101.

The RF unit 105 performs data transmission through a wireless communication network. The data processor 106 processes data from the RF unit 105 and sends the processed data to the control unit 101, and forwards a control signal from the control unit 101 to the RF unit 105. In particular, the RF unit 105 receives content files from an external source, and, in an alternative embodiment, also receives an image file from the external source.

The audio processor 107 outputs voice and audio data from the control unit 101 through a speaker SPK, and sends voice and audio data collected through a microphone MIC to the control unit 101. In an alternative embodiment, the audio processor 107 reproduces, through the speaker SPK under the control of the control unit 101, an audio signal generated from a content file being played on the display unit 104.

FIG. 2 illustrates an example of a configuration of the key input unit 103 of the mobile terminal.

The key input unit 103 generates a key signal for image searching in accordance with the present invention. Thereto, referring to FIG. 2, the key input unit 103 includes a wheel key 201, Music key 203, and More key 204. In addition, the wheel key 201 includes a Center key 201k, End key 201e, Send key 201s, Clear key 201c, and Back key 201b.

The wheel key 201 rotates clockwise and counter clockwise, and may act as a volume key for volume adjustment and as a selection key for function and content selection.

The center key 201k acts as an execution key. Pressing the center key 201 k causes one of playing of a content file selected through the wheel key 201 or display and a lower level menu of a function selected therethrough.

The Clear key 201c acts as a termination key. Pressing the Clear key 201 c causes termination of a current operation.

The End key 201e acts as a mode change key. Pressing the End key 201e causes a transition from a current operating mode to one of an upper level operating mode and an idle mode.

The Send key 201 s acts as a play control key. Pressing the Send key 201s suspends playing of a content file, and resumes playing of a suspended content file.

The Back key 201b acts as a revert key. Pressing the Back key 201b causes the mobile terminal to revert to one of a previous state and a previous screen.

The Music key 203 acts as a music mode key, and is installed at a location on the display unit 104 in proximity to the key input unit 103. That is, the Music key 203 is driven by a touch sensor installed just below the location labeled 'Music' (the upper left end of the screen of the display unit 104), and touching the upper left end of the screen of the display unit 104 causes initiation of a music mode.

The More key 204 acts as an option key, and is installed at a location on the display unit 104 near the key input unit 103. That is, the More key 204 is driven by a touch sensor installed just below the location labeled 'More' (the upper right end of the screen of the display unit 104), and touching the upper right end of the screen of the display unit 104 causes display of a lower level menu associated with a selected item during the music mode.

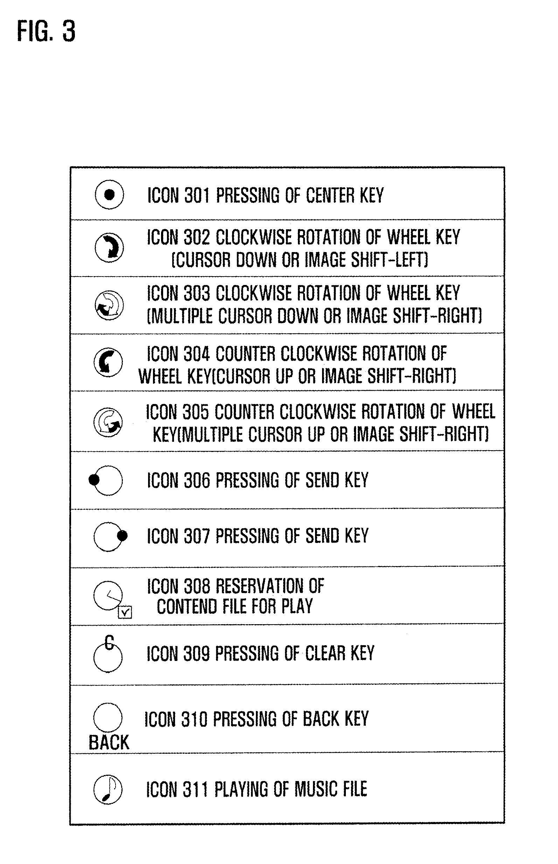

FIG. 3 is a table illustrating icons indicating key states in response to input of various keys through the key input unit 103.

Referring to FIGS. 2 and 3, an icon 301 indicates that the center key 201k has been pressed. An icon 302 indicates clockwise rotation of the wheel key 201 for one of cursor down and image shift-left. An icon 303 indicates clockwise rotation of the wheel key 201 for multiple actions of an action selected from cursor down and image shift-left. An icon 304 indicates counter clockwise rotation of the wheel key 201 for one of cursor up and image shift-right. An icon 305 indicates counter clockwise rotation of the wheel key 201 for multiple actions of an action selected from cursor down and image shift-right. An icon 306 indicates that the Send key 201s has been pressed. An icon 307 indicates that the End key 201e has been pressed. An icon 308 indicates reservation of a content file to be played. An icon 309 indicates that the Clear key 201 c has been pressed. An icon 310 indicates that the Back key 201b has been pressed. An icon 311 indicates that a song file is being played.

In an alternative embodiment, when a command is input using a key of the key input unit 103, a corresponding icon in FIG. 3 is displayed on the screen of the display unit 104.

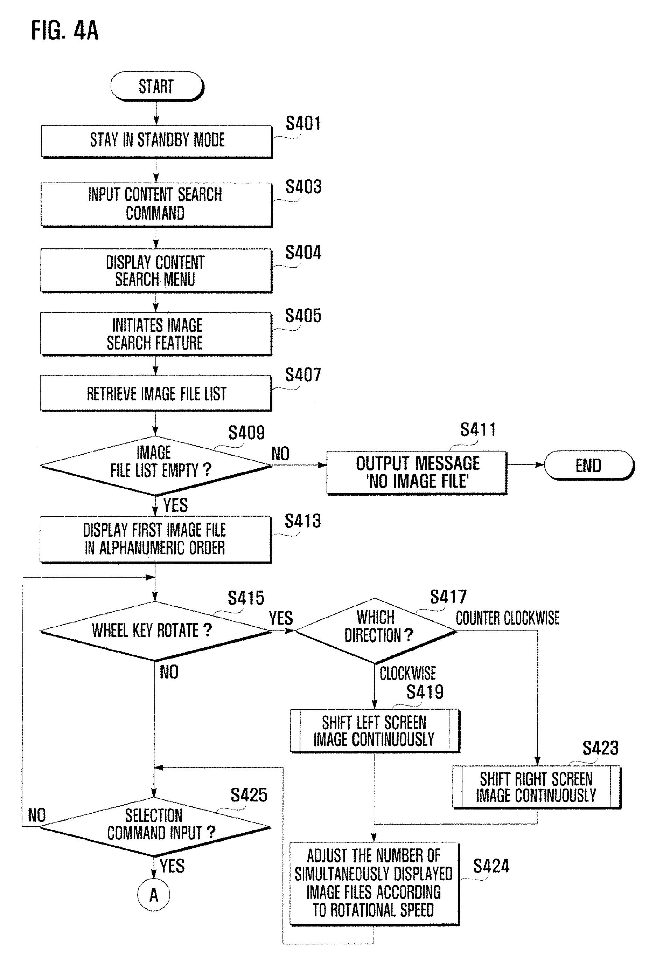

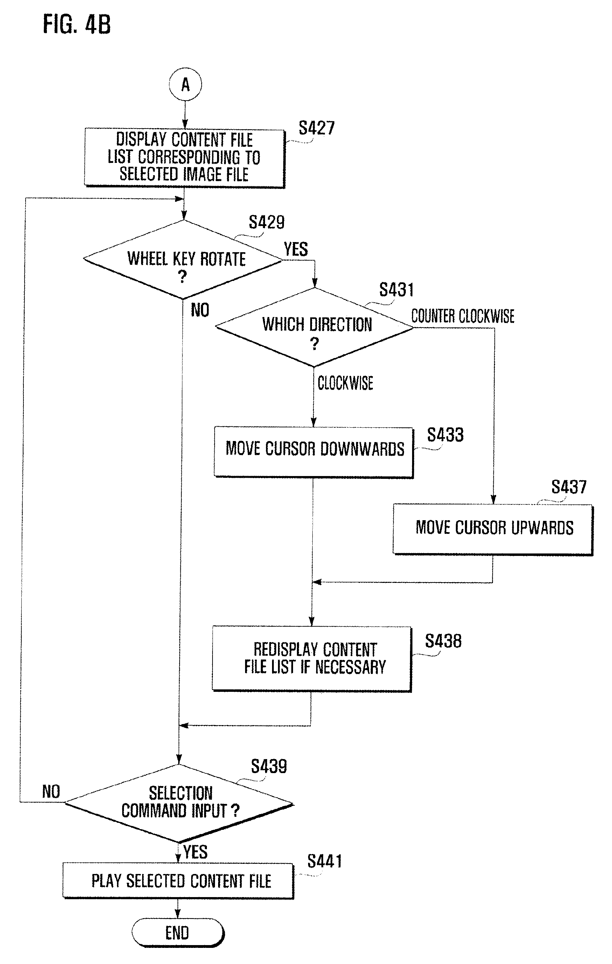

FIGS. 4A and 4B are a flow chart illustrating an example of a content file search method according to another exemplary embodiment of the present invention. In the description, for example, an image file such as a cover art of a music album is associated with the music album containing a group of content files. FIG. 4A relates to selection of one of album stored in a mobile terminal through image browsing, and FIG. 4B relates to selection of a content file to be played in the selected album.

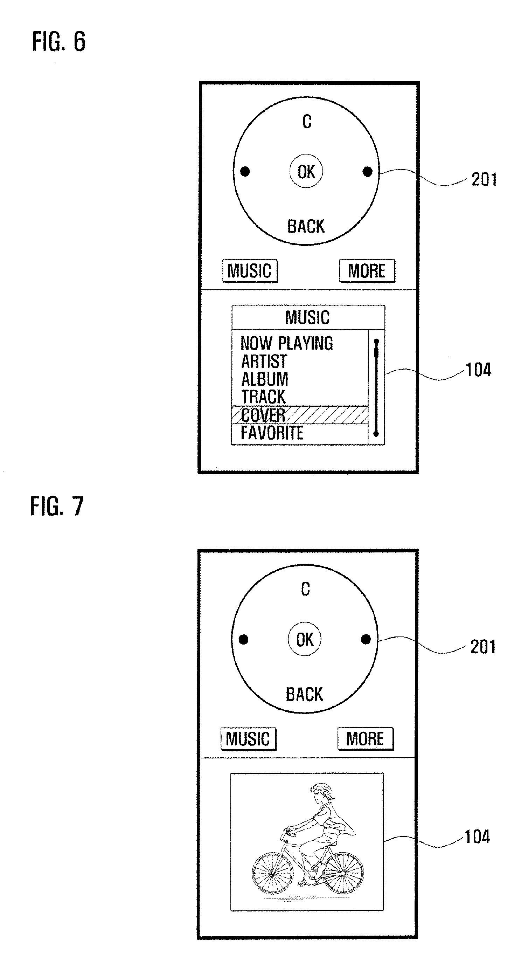

Referring to FIGS. 4A and 4B, the mobile terminal is powered on, and stays in a standby state (S401). When the user inputs a content search command to select a content file to be played (S403), the control unit 101 of the mobile terminal displays a content search menu on the screen of the display unit 104, as illustrated in FIG. 6 (S404). FIG. 6 illustrates a content search menu in a music mode. The content search menu in FIG. 6 includes menu items related to a song file currently being played, artists, albums, covers, tracks, and favorite songs.

The user initiates an image search function by selecting a menu item 'cover' in the content search menu (S405). The user rotates the wheel key 201 to place the cursor on the menu item 'cover', and presses the center key 201k.

In response to user selection of the menu item 'cover', the control unit 101 retrieves an image file list from a music library stored in the memory unit 102 (S407). An image file is associated with a group of content files such as an album or music CD, and may be the cover art of an album. A content file contains at least one of audio data and video data. An image file is linked to a group of content files through a standard media transfer protocol.

As a media transfer protocol, Media Transfer Protocol (MTP) may be used. MTP enables fast and easy data transmission between a mobile device and a Windows-based personal computer (PC). MTP is an extension to Picture Transfer Protocol (PTP), which has been developed for digital cameras by the International Imaging Industry Association. MTP also supports data transmission between one of a PC and a portable media player and a mobile terminal through a universal serial bus (USB) connection and through at least one of a wired and wireless Internet Protocol (IP) connection.

When song files are downloaded from a content server on the Internet to a mobile terminal using MTP, the song files and associated metadata (such as a cover art and artist information) are linked with identical tag information and downloaded together. Hence, an image file (for example, a cover art) can be associated with a group of content files, and a list of image files can be formed and used for searching. In an alternative embodiment, an image file list, image files, and contents files are stored together as one of a content database and music library, and are then searchable by a combination of one or more of date, artist, album name, and release order using tag information.

The control unit 101 determines whether the retrieved image file list is non-empty (S409). If the retrieved image file list is empty, the control unit 101 displays an alert message 'no image file' (S411), and terminates processing of this content file. If the retrieved image file list is non-empty, the control unit 101 sorts file names in the image file list in alphanumeric order, and displays an image file having the first file name in alphanumeric order (S413), as illustrated in FIG. 7. The image file may correspond to a still image, moving image or screen capture image of a moving image.

FIG. 7 is a screen representation illustrating an image output during an album cover search operation. The output image in FIG. 7 is a result of selecting the menu item 'cover' in the content search menu in FIG. 6, and corresponds to one of album cover image files stored in the mobile terminal whose file name is the first in alphanumeric order.

During image searching, image files in the retrieved image file list are displayed according to manipulation of the wheel key 201.

The control unit 101 checks whether a key signal associated with rotation of the wheel key 201 is input (S415). If a key signal associated with rotation of the wheel key 201 is input, the control unit 101 determines the direction of the rotation of the wheel key 201 (S417). If the wheel key 201 rotates clockwise, the control unit 101 shifts left, a screen image corresponding to a currently displayed image file, in a continuous manner (S419). If the wheel key 201 rotates counter-clockwise, the control unit 101 shifts right, a screen image corresponding to a currently displayed image file, in a continuous manner (S423).

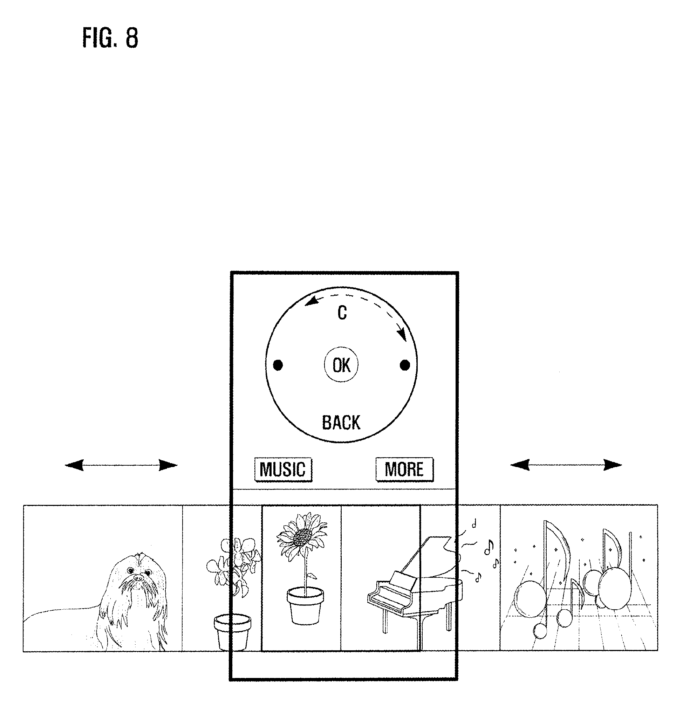

FIG. 8 is a screen representation illustrating display of image files according to rotation of the wheel key 201 a during an album cover search operation. In FIG. 8, image files are displayed in sequence in a continuous manner.

In addition, during image searching, the control unit 101 adjusts the number of simultaneously displayed image files according to a rotational speed of the wheel key 201 (S424).

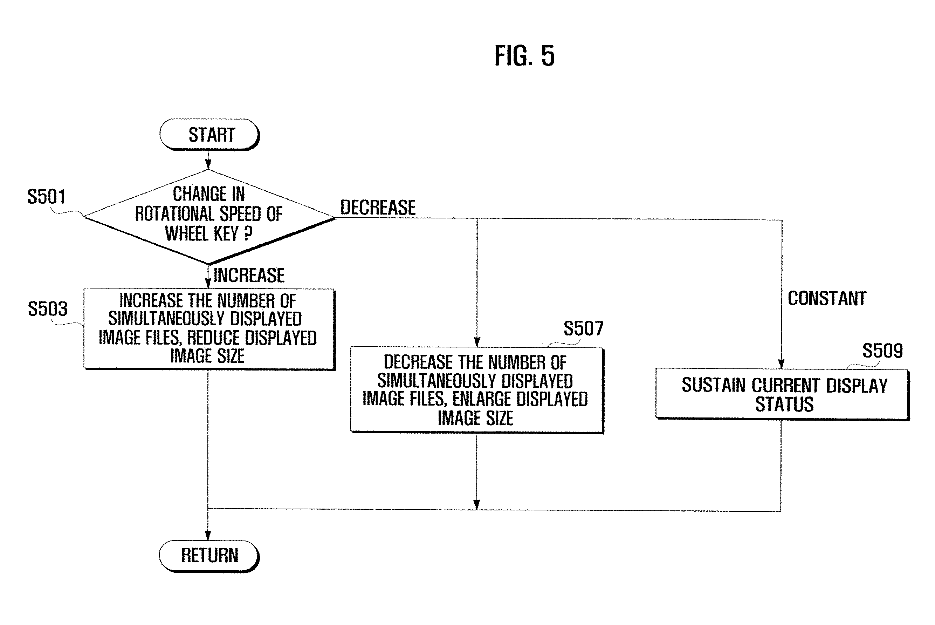

FIG. 5 is a flow chart illustrating an image display adjustment procedure of the method of FIGS. 4A and 4B according to rotational speed of the wheel key 201.

Referring to FIG. 5, the control unit 101 detects a change in rotational speed of the wheel key 201 (S501). If the rotational speed of the wheel key 201 increases, the control unit 101 increases the number of simultaneously displayed image files, and reduces the displayed image size accordingly (S503). If the rotational speed of the wheel key 201 decreases, the control unit 101 decreases the number of simultaneously displayed image files, and enlarges the displayed image size accordingly (S507). If the rotational speed of the wheel key 201 does not change, the control unit 101 does not change the number of simultaneously displayed image files, and the displayed image size (S509).

Returning to FIGS. 4A and 4B, steps S415 to S424 are repeated until the center key 201k is input. When the center key 201k is input during image searching (S425), an image file currently being displayed is selected.

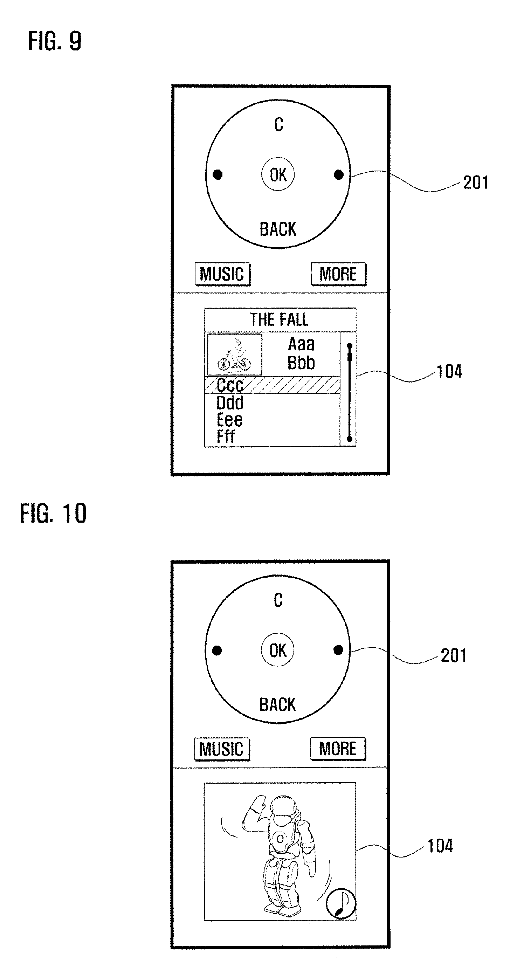

Upon selection of an image file, the control unit 101 displays a content file list containing identifiers of content files associated with the selected image file (S427), as illustrated in FIG. 9.

FIG. 9 is a screen representation illustrating a still cover image of an album and a list of songs contained in the album. In FIG. 9, the control unit 101 reads a content file list associated with the selected image file, sets at least one display attribute such as a size, position and width-to-height ratio for displaying the content file list, and controls the display unit 104 to display the content file list according to the set display attribute.

During display of the content file list, the user selects an identifier of a content file to be played.

The control unit 101 checks whether a key signal associated with rotation of the wheel key 201 is input (S429). If a key signal associated with rotation of the wheel key 201 is input, the control unit 101 determines the direction of the rotation of the wheel key 201 (S431). If the wheel key 201 rotates clockwise, the control unit 101 moves the cursor downwards to the next content identifier (S433). If the wheel key 201 rotates counter clockwise, the control unit 101 moves the cursor upwards to the previous content identifier (S437). The control unit 101 redisplays the content file list if necessary owing to cursor movement (S438).

Steps S429 to S438 are repeated until the Send key 201s is input. When the Send key 201s is input during display of the content file list (S439), a content identifier on which the cursor is placed is selected.

Upon selection of a content identifier, the control unit 101 plays a content file having the selected content identifier (S441), as illustrated in FIG. 10.

FIG. 10 is an example of a screen representation of an image output indicating playing of an audio file in the music mode. In FIG. 10, an icon 311 is displayed to indicate playing of a music file.

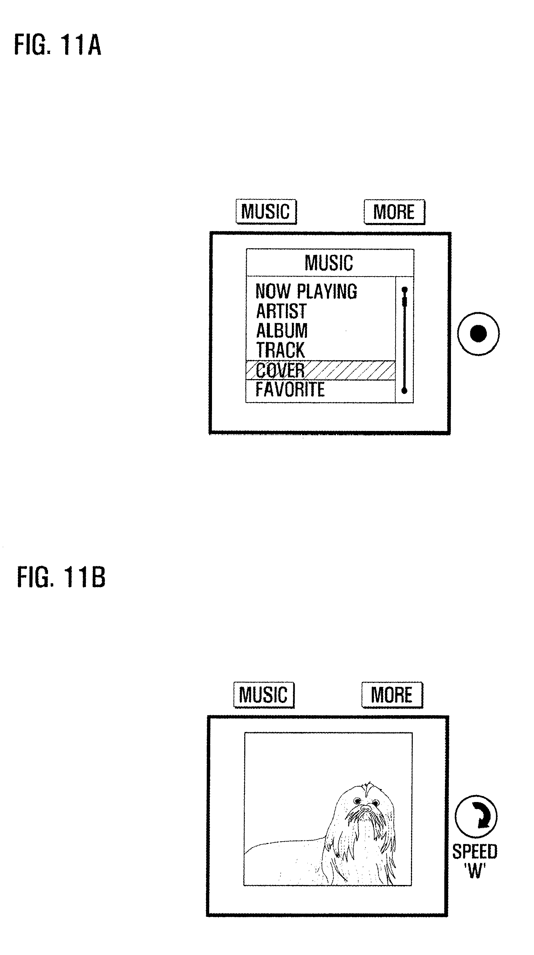

FIGS. 11A to 15E are examples of screen representations of images output during image searching.

In some of FIGS. 11A to 15E, speed 'w', speed 'x', speed 'y', or speed 'z' is attached together with an icon described in FIG. 3, as an indicator of rotational speed of the wheel key 201.

Speed 'w' denotes rotational speed at which one cover image is displayed on the display unit 104 in a full-screen mode. Speed 'x' denotes rotational speed at which two partial cover images are displayed at opposite ends of the screen of the display unit 104 and one cover image is displayed between the two partial cover images. Speed 'y' denotes rotational speed at which two partial cover images are displayed at opposite ends of the screen and three cover images are displayed between the two partial cover images. Speed 'z' denotes rotational speed at which two partial cover images are displayed at opposite ends of the screen and five cover images are displayed between the two partial cover images.

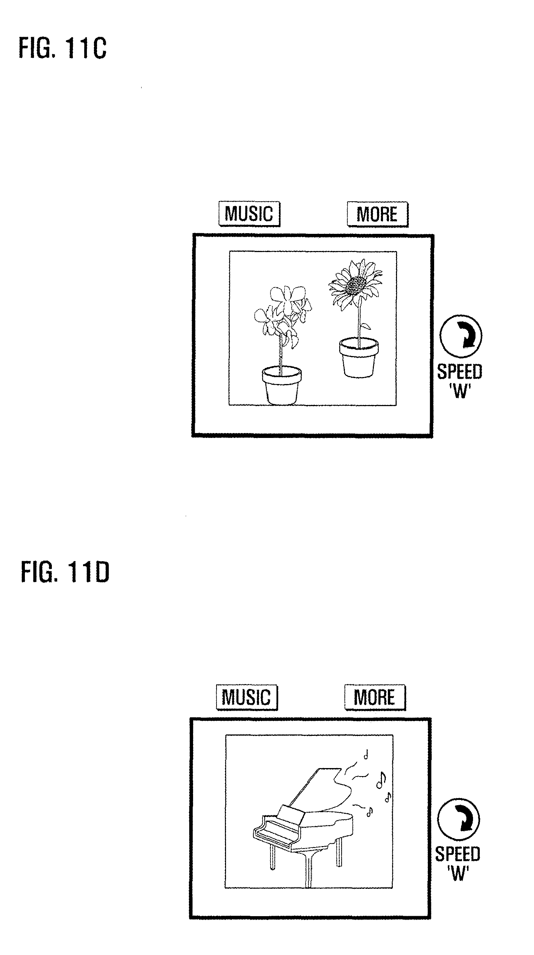

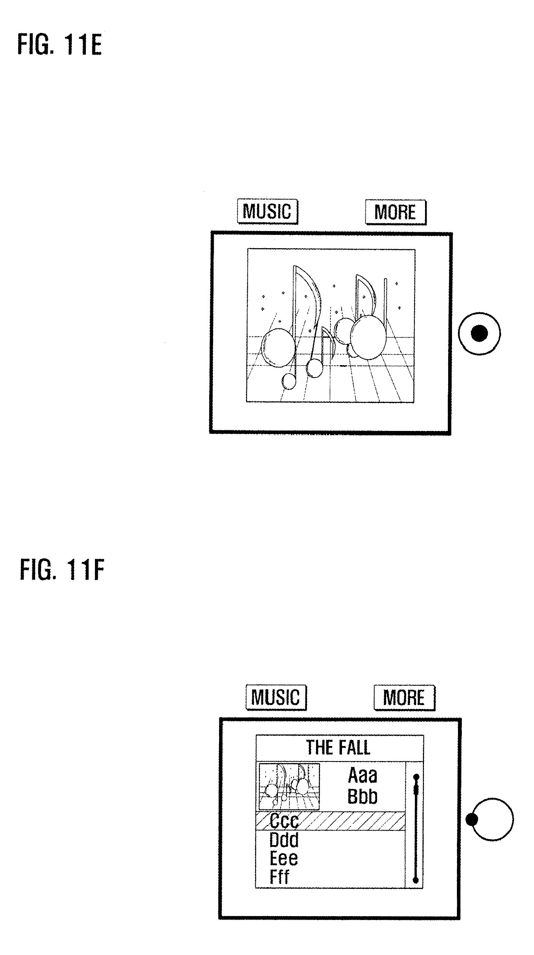

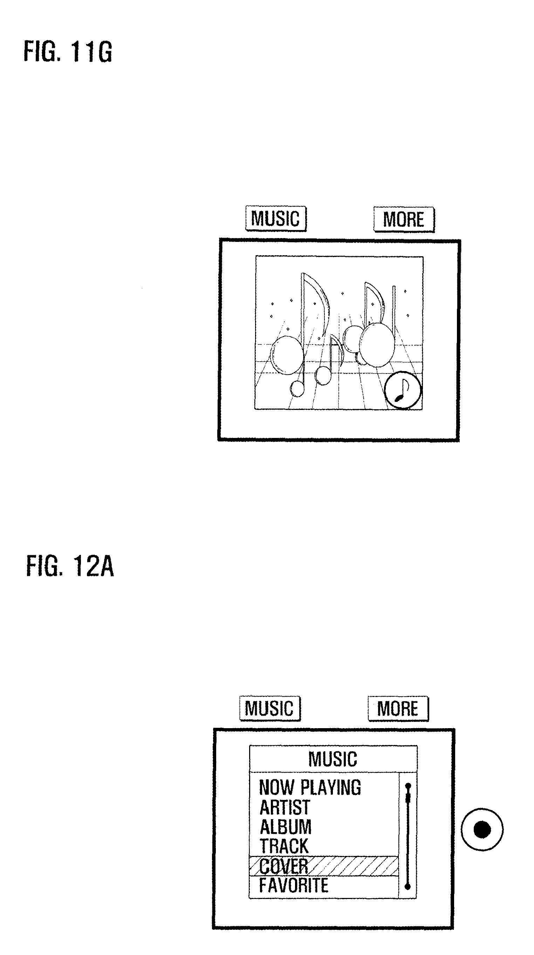

FIGS. 11 A to 11G are examples of display of one cover image at a time. FIG. 11A illustrates an example of a display of a content search menu in a music mode. Selecting a menu item 'Cover' by entering the center key 201k results in display of the first cover image file in alphanumeric order with respect to the file name, as illustrated in FIG. 11B. Thereafter, rotating the wheel key 201 at speed 'w' results in successive display of cover image files as illustrated in FIGS. 11C, 11D and 11E. Selecting the cover image of FIG. 11E by entering the center key 201k results in display of a list of song names in an album associated with the selected cover image file, as illustrated in FIG. 11F. Selecting a particular song name in FIG. 11F by entering the Send key 201s results in playing of a song file having the selected song name, as illustrated in FIG. 11G.

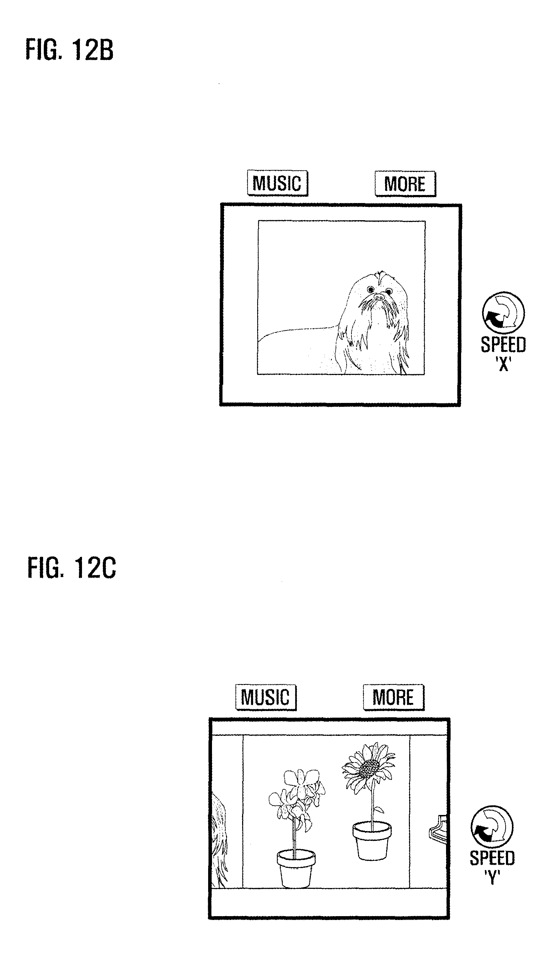

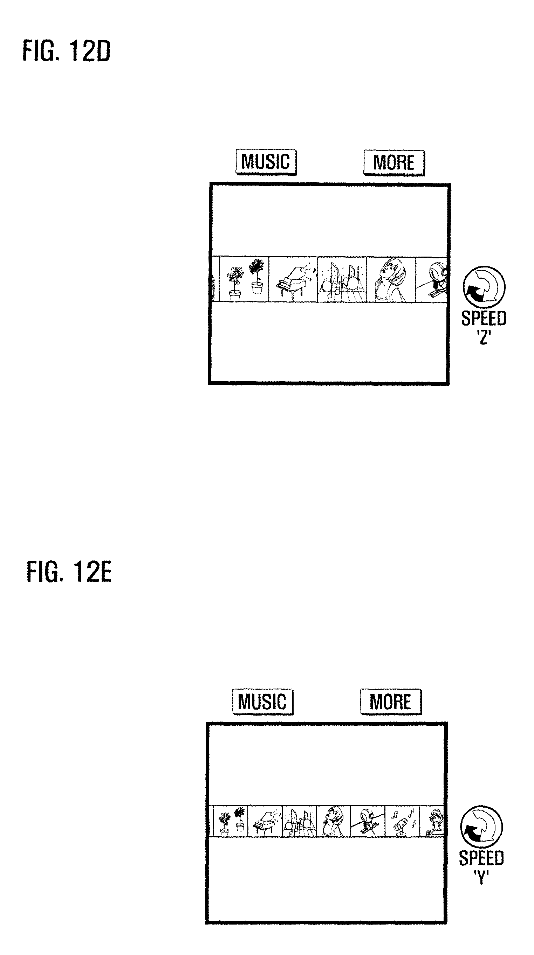

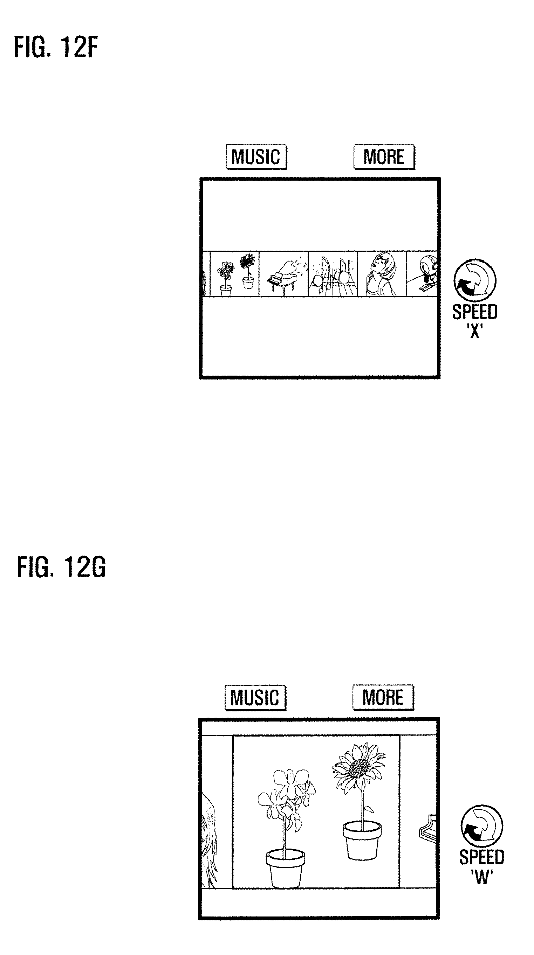

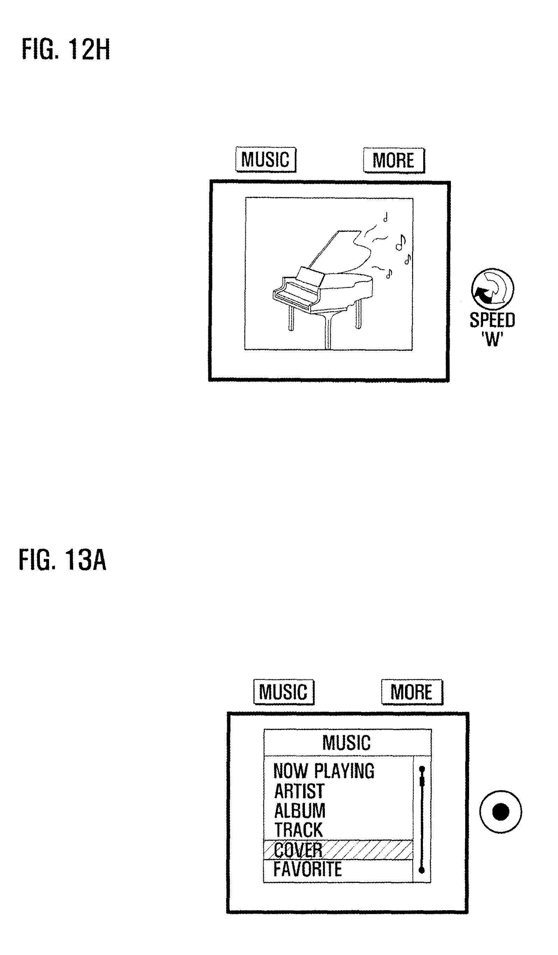

FIGS. 12A to 12H are examples of a display of multiple cover images at a time. FIG. 12A illustrates display of a content search menu in a music mode. Selecting a menu item 'Cover' by entering the center key 201k results in display of the first cover image file in alphanumeric order with respect to the file name, as illustrated in FIG. 12B. Thereafter, rotating the wheel key 201 at speed 'x' results in display of three cover images as illustrated in FIG. 12C, rotation at speed 'y' results in display of five cover images as illustrated in FIG. 12D, and rotation at speed 'z' results in display of seven cover images as illustrated in FIG. 12E. Thereafter, rotation of the wheel key 201 at speed 'y' results in display of three cover images and two partial cover images as illustrated in FIG. 12F; rotation at speed 'x' results in display of one cover image and two partial cover images as illustrated in FIG. 12G; and rotation at speed 'w' results in display of one cover image in a full-screen mode as illustrated in FIG. 12H. As described above, the number of simultaneously displayed image files and the size of each displayed image are varied according to rotational speed of the wheel key 201.

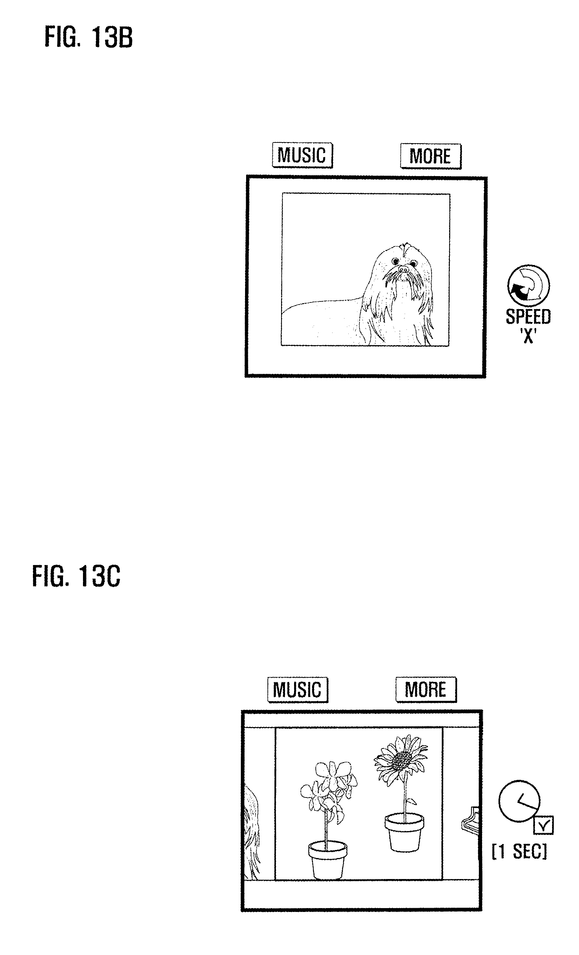

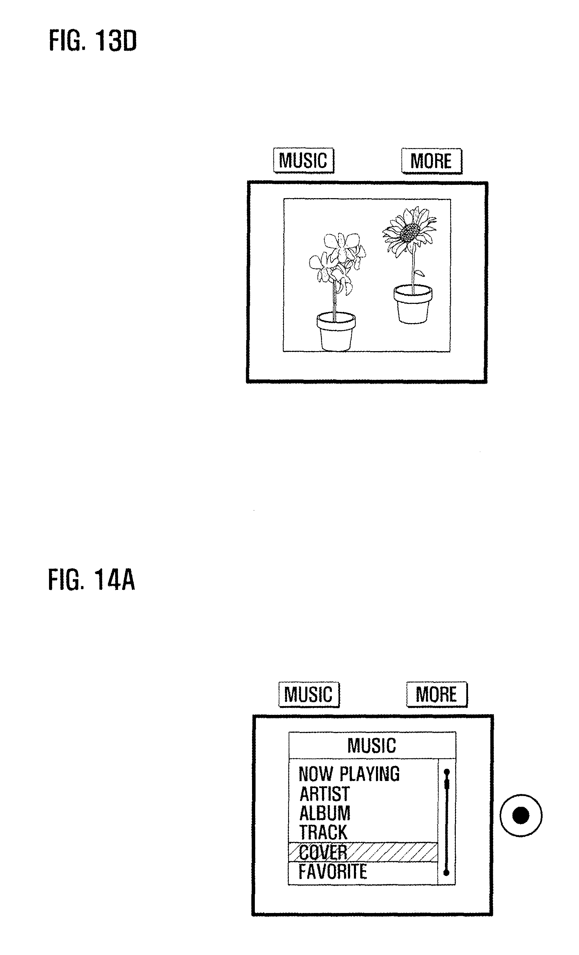

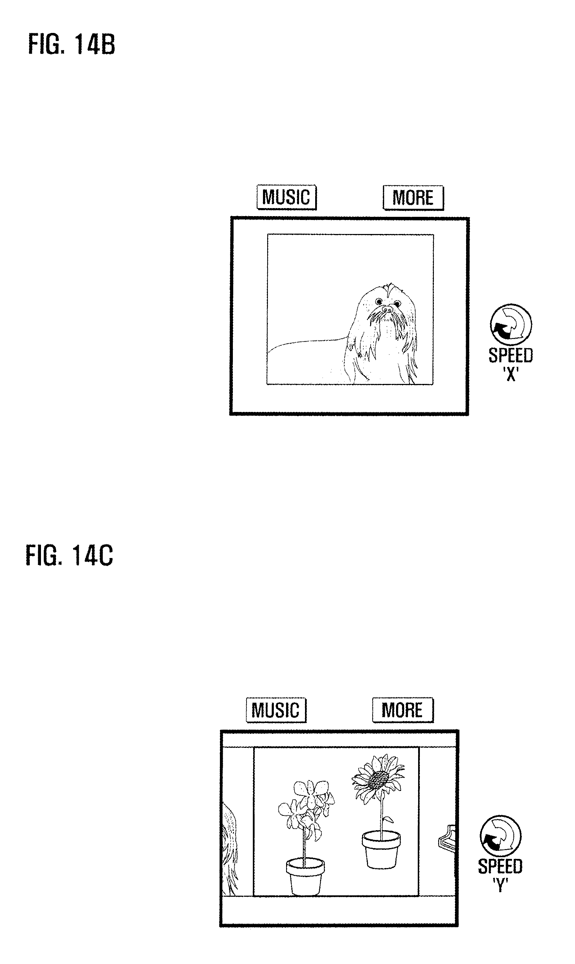

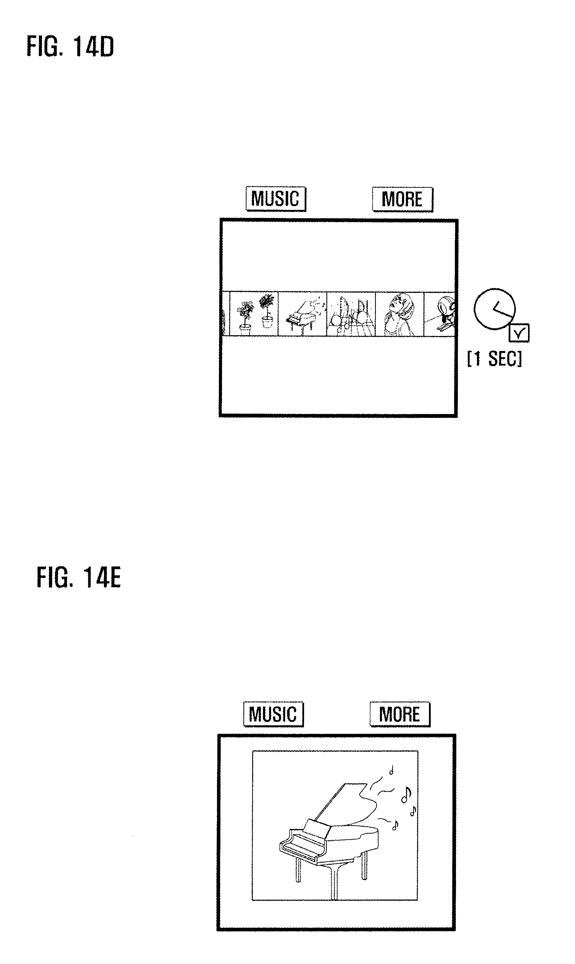

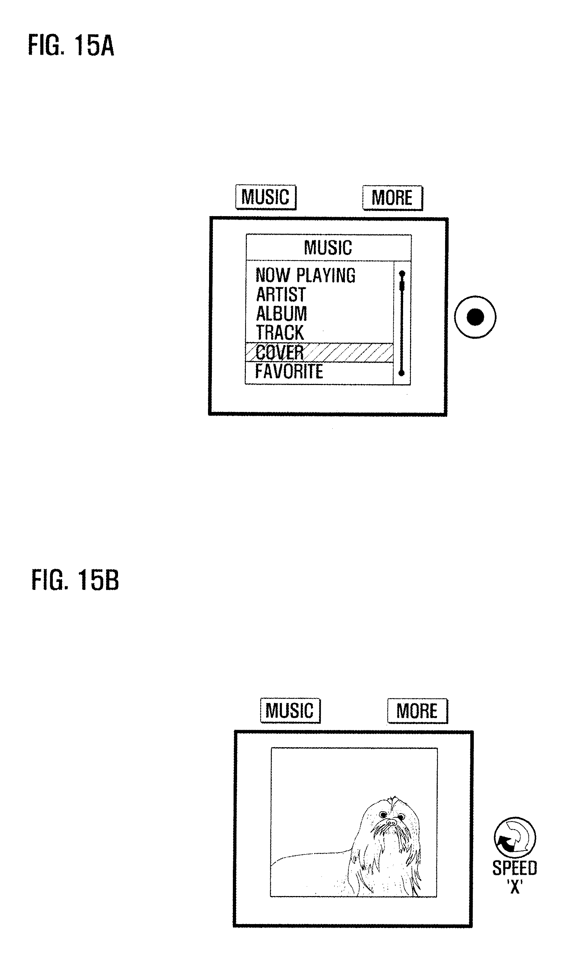

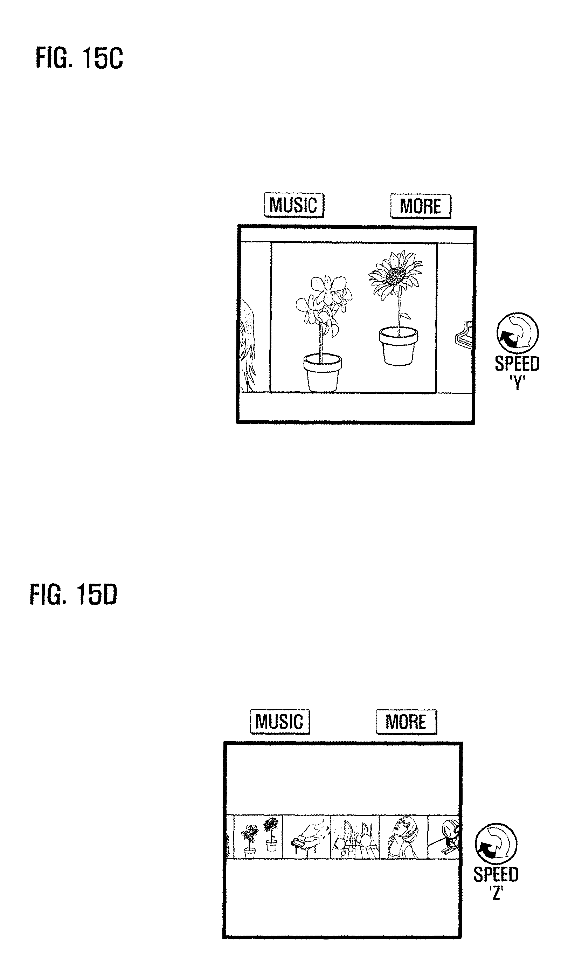

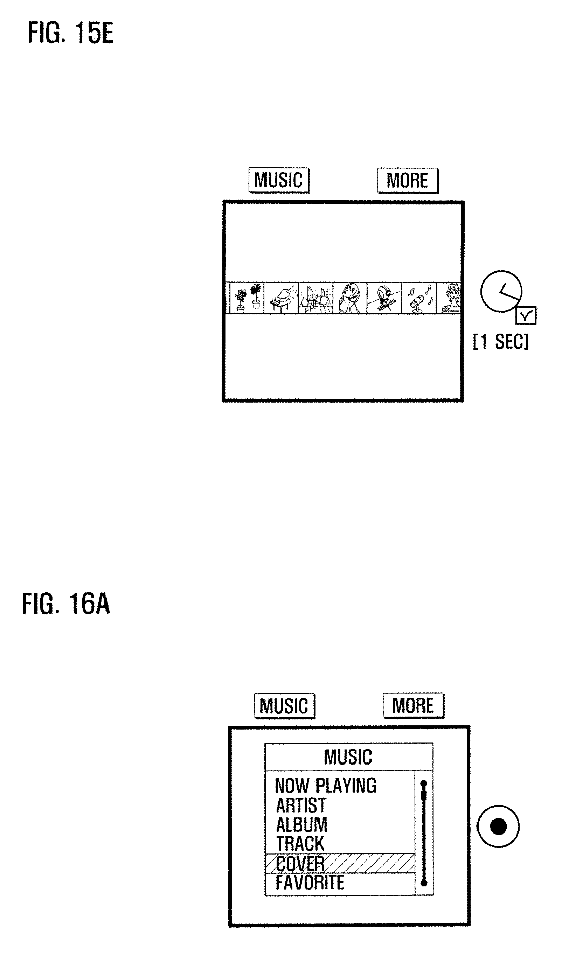

FIGS. 13A to 13D, FIGS. 14A to 14E, and FIGS. 15A to 15F also provide examples of album cover image display according to rotational speed of the wheel key 201 during image searching. In particular, an icon such as '1 sec' can be attached in connection with display of multiple cover image files according to user settings for the wheel key 201. For example, an icon '1 sec' in FIG. 13C indicates that the central one of the displayed cover images will be redisplayed in a full-screen mode after 1 second as illustrated in FIG. 13D. The same description is applicable to FIGS. 14D and 14E, and to FIG. 15E.

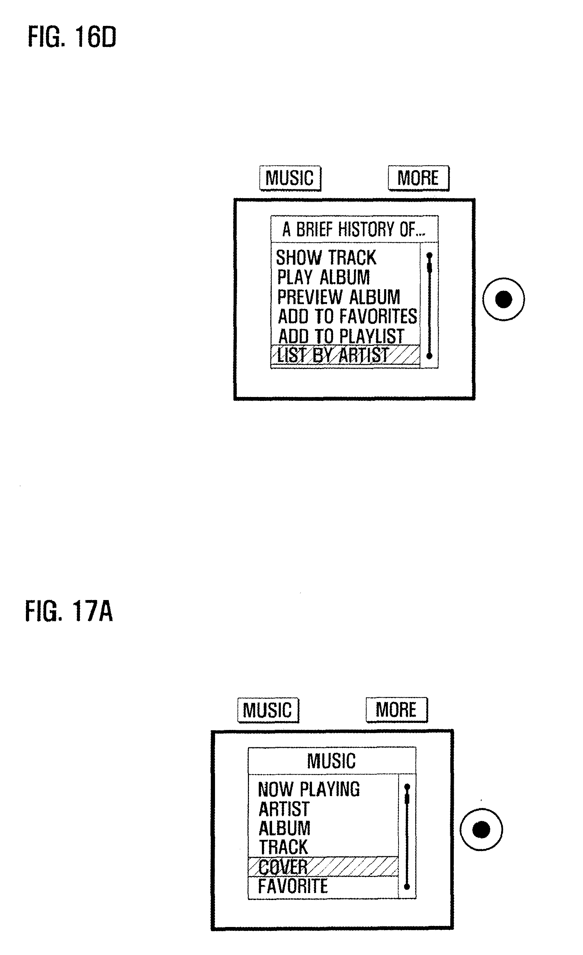

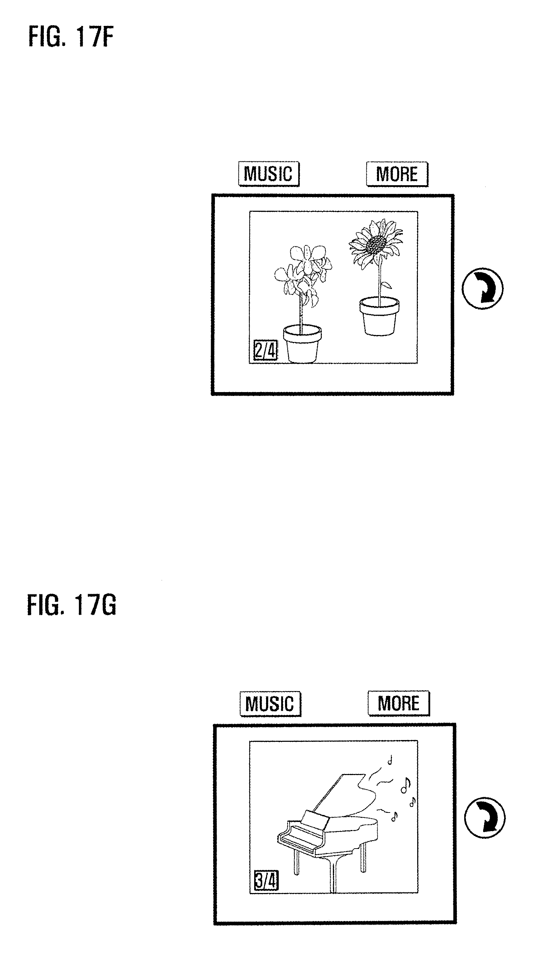

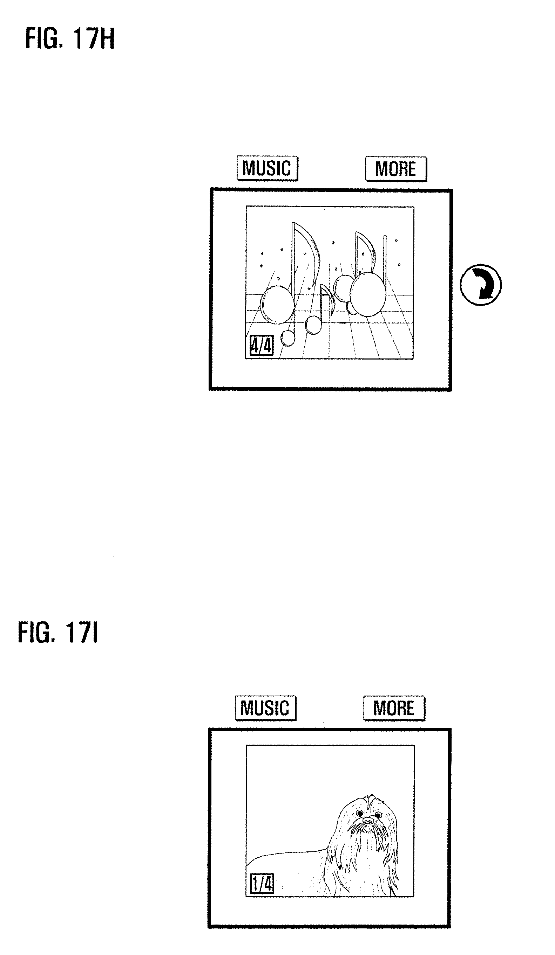

FIGS. 16A to 16D and 17A to 17K are examples of screen representations of images output in response to input of an option key during image searching.

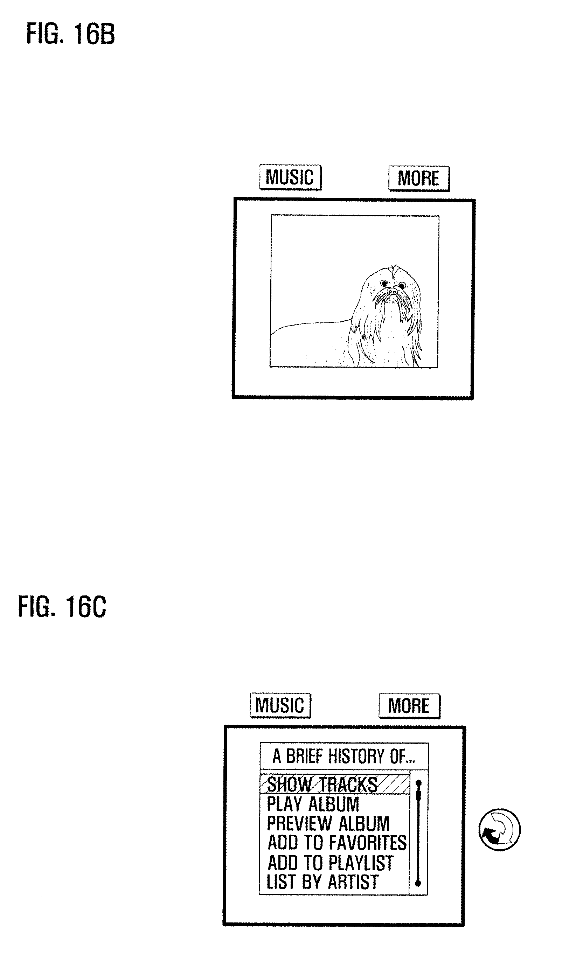

FIG. 16A illustrates an example of a display of a content search menu in a music mode. Selecting a menu item 'Cover' by entering the center key 201k results in display of the first cover image file in alphanumeric order with respect to the file name, as illustrated in FIG. 16B. Touching the upper right end of the screen of the display unit 104 in proximity to the More key 204 results in display of an album handling menu, as illustrated in FIG. 16C. When the user selects a menu item by rotating the wheel key 201 and entering the center key 201k as in FIG. 16D, the control unit 101 performs an operation associated with the selected menu item. In FIG. 16D, the menu item 'List by artist' is selected, and the control unit 101 controls display of cover image files in alphanumeric order with respect to artist name.

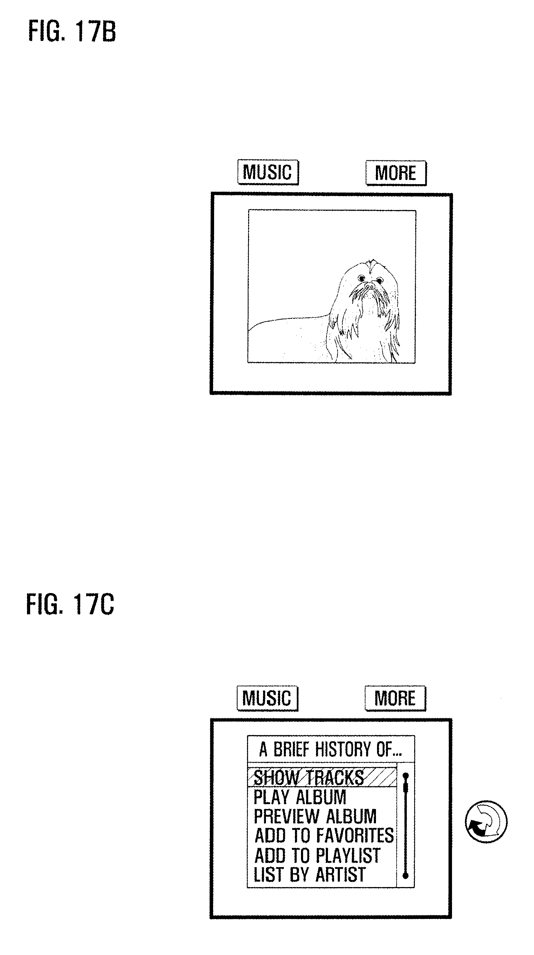

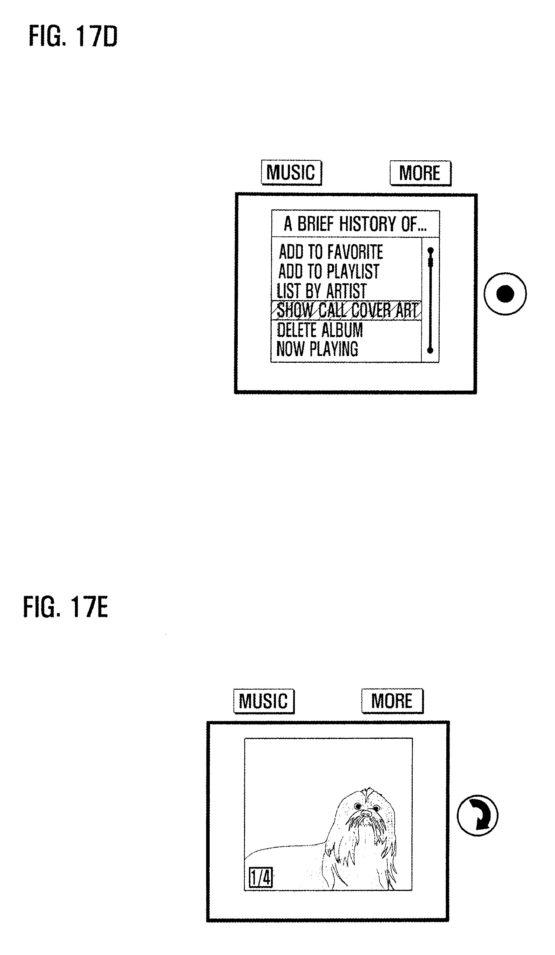

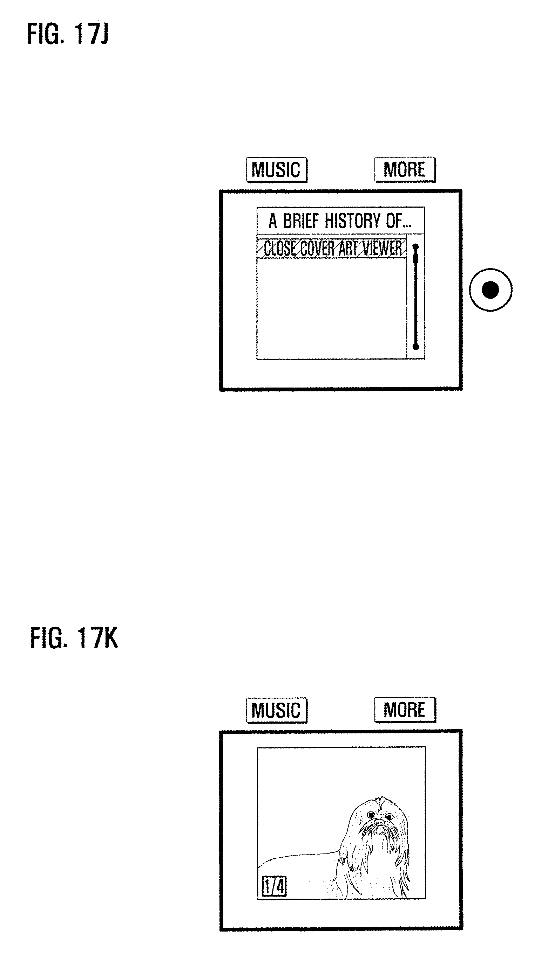

FIG. 17A illustrates an example of a display of a content search menu in a music mode. Selecting a menu item 'Cover' by entering the center key 201k results in display of the first cover image file in alphanumeric order with respect to file name, as illustrated in FIG. 17B. Touching the upper right end of the display unit 104 in proximity to the More key 204 results in display of an album handling menu, as illustrated in FIG. 17C. When the user selects a menu item of the album handling menu by entering the center key 201k as illustrated in FIG. 17D, an operation associated with the selected menu item is performed. In FIG. 17D, the menu item 'show all cover art' is selected, and cover image files are displayed in alphanumeric order with respect to artist name. If multiple albums are released by an artist, corresponding multiple cover image files are displayed in sequence in response to rotation of the wheel key 201, as illustrated in FIGS. 17E to 17H (four cover image files). When the user enters the More key 204 during display of multiple cover image files associated with an artist as in FIG. 17I, and selects a menu item 'Close cover art viewer' of the album handling menu as illustrated in FIG. 17J, a cover image file associated with the most recently released album is displayed as in FIG. 17K. If the Back key 201b is pressed at the state of FIG. 17J, the content search menu in the music mode is redisplayed, as illustrated in FIG. 17A.

As is apparent from the above description, the present invention provides a content file search method and apparatus for a mobile terminal that enable an intuitive visual content search with the help of visual images. Screen images corresponding to currently displayed image files are continuously shifted left or right during image searching, in an exemplary. The number of simultaneously displayed still images and their sizes is adjusted during image searching, in another exemplary embodiment.

While exemplary embodiments of the present invention have been shown and described in this specification, it will be understood by those skilled in the art that various changes or modifications of the embodiments are possible without departing from the spirit and scope of the invention as defined by the appended claims.

## Claims

1. A content file search method for a mobile terminal that stores content files and at least one image file including images associated in one of part and whole with each of the content files, the method comprising:
displaying in response to a content file search mode command, images corresponding to one of the at least one image file; and
searching images displayed in a continuous manner while shifting the displayed images in response to an input signal.

2. The content file search method of claim 1, further comprising:
outputting, upon selection of one of the images displayed in a continuous manner, a content file list associated with the selected image; and
playing, upon selection of one of content files in the content file list, the selected one of content files.

3. The content file search method of claim 1, further comprising outputting, in response to the content file search mode command, a content file search menu.

4. The content file search method of claim 1, wherein the at least one image file is a type selected from a still image, moving image, and screen capture image of a moving image.

5. The content file search method of claim 1, wherein the at least one image file is associated in one of part and whole with at least one content file through a media transfer protocol, and, upon selection of the associated at least one content file, an image file associated with the selected content file is displayed.

6. The content file search method of claim 1, wherein displaying an image further comprises:
sorting filenames of the at least one image file in alphanumeric order; and
displaying an image corresponding to one of the at least one image file in order of the sorted filenames.

7. The content file search method of claim 1, wherein searching images further comprises adjusting an image display time and image size of a displayed image according to the input signal.

8. The content file search method of claim 7, wherein the input signal is generated by a wheel key.

9. The content file search method of claim 8, wherein the image display time and image size decrease with increasing rotation speed of the wheel key, and the image display time and image size increase with decreasing rotation speed of the wheel key.

10. The content file search method of claim 2, wherein outputting a content file list further comprises:
reading a content file list associated with the selected image;
setting at least one display attribute selected from the group consisting of size, position and width-to-height ratio for the read content file list; and
displaying the content file list in accordance with the set at least one display attribute.

11. The content file search method of claim 2, further comprising storing, in response to a content file store command, content files and associated image files together, and wherein storing content files further comprises creating a database to save the image files, content files, and content file lists therein.

12. The content file search method of claim 8, wherein searching images further comprises:
shifting displayed images in response to rotation of the wheel key; and
changing a direction of image shifting according to a change in a rotational direction of the wheel key.

13. The content file search method of claim 8, wherein adjusting the image display time and image size further comprises adjusting the image display time and image size in stages according to at least one preset rotational speed of the wheel key.

14. A content file search apparatus for a mobile terminal, comprising:
a memory unit for storing content files and at least one image file associated in one of part and whole with the content files;
a display unit for displaying a file list of content files stored in the memory unit, and images corresponding to the associated at least one image file;
a key input unit having a rotatable wheel key; and
a control unit for controlling the display unit to display images in a continuous manner while shifting the displayed images in response to an input signal from the key input unit.

15. The content file search apparatus of claim 14, wherein the control unit is further configured to shift images displayed on the display unit in response to rotation of the wheel key.

16. The content file search apparatus of claim 15, wherein the control unit is further configured to shift images displayed on the display unit in an up-down or left-right direction according to rotation of the rotatable wheel key.

17. The content file search apparatus of claim 15, wherein the control unit is further configured to adjust the image display time and image size of the displayed image according to an input signal from the key input unit.

18. The content file search apparatus of claim 17, wherein the control unit is further configured to adjust the image display time and image size of the displayed image in stages according to at least one preset rotational speed of the wheel key.

19. The content file search apparatus of claim 15, wherein the control unit is further configured to decrease the image display time and image size with an increasing rotation speed of the wheel key, and increases the image display time and image size with a decreasing rotation speed of the wheel key.

20. The content file search apparatus of claim 14, wherein the control unit is further configured to read a content file list associated with a selected image, set at least one display attribute selected from the group consisting of size, position and width-to-height ratio for the content file list, and control the display unit to display the content file list according to the set display attribute.
